# EUROPÄISCHE PATENTSCHRIFT

(11) **EP 0 485 418 B1**
(45) Veröffentlichungstag und Bekanntmachung des Hinweises auf die Patenterteilung: **23.11.1994**
(21) Anmeldenummer: 90911277.3
(22) Anmeldetag: 01.08.1990
(51) Int. Cl.: G01F 1/72, G01F 1/68

(54) **VERFAHREN ZUR MESSFEHLERKORREKTUR EINES HEISSFILM-LUFTMASSENMESSERS**
PROCESS FOR CORRECTING MEASUREMENT ERRORS OF A HOT-FILM DEVICE FOR MEASURING AIR MASSES
PROCEDE DE CORRECTION DES ERREURS DE MESURE D'UN APPAREIL DE MESURE DES MASSES D'AIR A PELLICULE CHAUDE

(30) Priorität: 01.08.1989 DE 3925377
(43) Veröffentlichungstag der Anmeldung: 20.05.1992
(73) Patentinhaber: ROBERT BOSCH GMBH, 70442 Stuttgart (DE)
(72) Erfinder: SCHNAIBEL, Eberhard, D-7241 Hemmingen (DE); JUNGINGER, Erich, D-7000 Stuttgart 1 (DE); HIRSCHMANN, Klaus, D-7250 Leonberg (DE)
(86) Internationale Anmeldenummer: DE9000590
(87) Internationale Veröffentlichungsnummer: WO9102225

(56) Entgegenhaltungen:
- EP-A- 0 065 771
- EP-A- 0 154 509
- EP-A- 0 339 638
- EP-A- 0 347 218
- EP-B- 0 119 377
- GB-A- 2 159 983
- US-A- 4 184 458
- US-A- 4 571 990
- PATENT ABSTRACTS OF JAPAN, Band 130, Nr. 6 (M-143), 16. Juli 1982 ; & JP-A-57 056 632

## Beschreibung

### Stand der Technik

Die Erfindung betrifft ein Verfahren zur Korrektur eines durch Rückströmung auftretenden Meßfehlers eines Heißfilm-Luftmassenmessers

Zur Erfassung der von Brennkraftmaschinen angesaugten Luftmasse können gemäß EP-B1-0 119 377 bzw. US-A-4 571 990 Heißfilm-Lufmengenmesser zum Einsatz gelangen. Diese weisen ein beheiztes Element auf, daß in dem zu messenden Luftstrom liegt und dadurch gekühlt wird. Insbesondere ist es möglich, das beheizte Element als Teil einer elektrischen Brückenschaltung zu verwenden und durch einen durch dieses hindurchfließenden Strom auf konstante Übertemperatur zur Ansauglufttemperatur zu halten. Durch dieses Prinzip ist der benötigte Heizstrom ein Maß für die vom Motor angesaugte Luftmasse. Die in gewissen Betriebsbereichen einer Brennkraftmaschine möglicherweise auftretenden Pulsationen der Ansaugluft können zu einer Verfälschung des Meßergebnis führen. Dieses ist insbesondere dann der Fall, wenn es zu einer sogenannten Rückströmung kommt, da der Heißfilm-Luftmassenmesser die Strömungsrichtung nicht unterscheiden kann.

Es ist aus diesem Stand der Technik bekannt, einen Heißfilm-Luftmassenmesser mit einer Auswerteschaltung zu versehen, um eine programmtechnische Erkennung einer Rückströmung vorzunehmen. Hierzu ist eine hohe Rechnerleistung erforderlich. Die Erkennung der Rückströmung wird durch Auswertung der Signalform vorgenommen.

Schließlich ist es aus EP-A-0 154 509, Patent Abstracts of Japan vol. 130 no. 006 (M-143) 16.07.82 und JP-A-57 056 632 bzw. GB-A-2159 983 bekannt, daß bei dem Auftreten von Pulsationen, insbesondere Rückströmung, die Luftmengenmessung nicht von dem Heißfilm- oder Hitzdraht-Luftmassenmesser als erster Wert, sondern als zweiter Wert von einer auf einem anderen Bestimmungsverfahren funktionierenden Schaltung, geliefert wird. Bei solchen Vorrichtungen muß jedoch dieser zweite Wert wegen bestimmter Parameter, z. B. Höheneinfluß, korrigiert werden.

### Vorteile der Erfindung

Das erfindungsgemäße Verfahren mit den im Hauptanspruch genannten Merkmalen hat demgegenüber den Vorteil, daß auch beim Auftreten von Rückströmungen eine hohe Genauigkeit der Luftmassenerfassung und damit des Lastwertes der Brennkraftmaschine gegeben ist. Eine Auswertung der Signalform, die relativ aufwendig ist und eine entsprechende Rechnerkapazität erfordert, ist dazu nicht erforderlich. Es wird die mit dem Heißfilm-Luftmassenmesser erfaßte Luftmasse als ein erster Wert bestimmt und mit einem zweiten Wert verglichen, der mittels eines weiteren, unabhängig arbeitenden Luftmengen-Bestimmungsverfahren ermittelt wird. In Abhängigkeit von dem jeweils vorliegend Betriebsbereich wird entweder der eine oder der andere Wert, als gültige, die Luftmasse bestimmende Größe herangezogen. Es wird die Luftmasse pro Hub der Brennkraftmaschine ermittelt, die -bei der mit Einspritzanlage versehenen Brennkraftmaschine und stöchiometrischer Verbrennung- proportional zur Einspritzzeit der den Kraftstoff einbringenden Einspritzventile ist. Um stets eine individuelle Anpassung auf die jeweils vorliegenden Verhältnisse vornehmen zu können, wird erfindungsgemäß in mindestens einem rückströmungsfreien Betriebsbereich ein Korrektursignal aus einem Vergleich des ersten und des zweiten Wertes gewonnen und zur Korrektur des zweiten Wertes in Rückströmung aufweisenden Betriebsbereichen verwendet. In bestimmten Betriebsbereichen werden die vom Heißfilm-Luftmassenmesser erfaßten Wert verwendet, in anderen Betriebsbereichen, in denen der von dem Heißfilm-Luftmassenmesser erfaßte Wert fehlerbehaftet ist, wird mit einem weiteren Wert gearbeitet, der aufgrund eines andersartigen Luftmengen-Bestimmungsverfahrens ermittelt wird, wobei bei dem genannten Luftmengen-Bestimmungsverfahren auftretende Fehler mittels eines Adaptionsverfahrens korrigiert werden. Das die Adaption ermöglichende Korrektursignal wird dabei durch einen in einem rückströmungsfeien Betriebsbereich erfolgenden Vergleich des ersten und des zweiten Wertes gewonnen. Hierbei, wird berücksichtigt, daß in bestimmten Betriebsbereichen keine Rückströmung auftritt, so daß der Heißfilm-Luftmassenmesser korrekte Daten liefert. Diese bilden die Grundlage, nämlich einen Kalibrierwert für das nach dem zweiten LuftmengenBestimmungsverfahren ermittelten Ergebnis. Insofern wird in Bereichen, in denen der Heißfilm-Luftmassenmesser aufgrund von Rückströmung fehlerbehaftete Ergebnisse liefert, durch die erfindungsgemäße Adaption bei einem auf einem anderen Prinzip arbeitenden Luftmengen-Bestimmungsverfahren eine sehr hohe Genauigkeit erzielt.

Nach einer Weiterbildung der Erfindung ist vorgesehen, daß das Korrektursignal ein Höhenkorrektursignal und/oder ein Temperaturkorrektursignal ist. Mithin ist das Meßergebnis des zweiten Luftmengen-Bestimmungsverfahrens höhenabhängig und/oder Temperaturabhängig, so daß zur Vermeidung von Meßfehlern eine Korrektur vorgenommen werden muß. Durch die Höhenkorrektur und/oder Temperaturkorrektur erhält man aus der ermittelten Luftmenge die Luftmasse.

Vorzugsweise wird bei dem zweiten Luftmengen-Bestimmungsverfahren der Drosselklappenwinkel und die Drehzahl der Brennkraftmaschine herangezogen und zur Bestimmung des zweiten Wertes einer Kennfeld- und/oder Algorithmus-Bearbeitung unterzogen.

Vorzugsweise wird der Meßwert des Heißfilm-Luftmassenmessers als gültige Größe im Leerlauf, bei kleinen Drosselklappenwinkeln und bei hohen Drehzahlen verwendet. Die hierbei eingenommenen Betriebsbereiche garantieren ein fehlerfreies Meßergebnis des Heißfilm-Luftmassenmessers. Im Hinblick auf die genannten hohen Drehzahlen läßt sich sagen, daß für Drehzahlen über ca. 3000 pro min keine Rückströmung mehr auftritt. Diese Grenzdrehzahl ist abhängig von der jeweiligen Saugrohrgeometrie. Da der Saugrohrdruck bei Drehzahlen < 3000 pro min bereits bei einem relativ kleinen Drosselklappenwinkel auch bei einem weiteren öffnen der Drosselklappe nicht mehr zunimmt und der so gekennzeichnete Grenzwinkel außerdem noch eine Funktion der Drehzahl ist, soll dieser relativ komplizierte Zusammenhang durch eine Kennlinie (Grenzkennlinie) beschrieben werden. Diese wird so bestimmt, daß ein Grenzwinkel vorliegt, der vorzugsweise 95 % der Vollast, das heißt, des maximalen Saugrohrdrucks entspricht. Ist der momentan vorliegende Drosselklappenwinkel kleiner als der für die momentan vorliegende Drehzahl dem Kennfeld entnehmbare bzw. über den Algorithmus berechenbare Grenzwinkel, dann liegt ein Betriebsbereich der Brennkraftmaschine vor, in dem keine Rückströmung auftreten kann. Mithin wird in diesen Betriebsbereichen der Meßwert des Heißfilm-Luftmassenmessers als gültige Größe verwendet. Ist der Drosselklappenwinkel jedoch größer und befindet sich die Brennkraftmaschine in einem Drehzahlbereich, der unterhalb der genannten Grenzdrehzahl liegt, dann befindet man sich in einem Vollastnutzenbereich, in dem Rückströmung möglich ist. In diesem Bereich wird dann erfindungsgemäß nicht der Meßwert des Heißfilm-Luftmassenmessers als gültige Größe, sondern der Meßwert des zweiten Luftmengen-Bestimmungsverfahrens unter Berücksichtigung der geschilderten Adaption als gültige Größe verwendet.

Zusammenfassend läßt sich also sagen, daß der Meßwert des Heißfilm-Luftmassenmessers als gültige Größe bei Arbeitspunkten herangezogen wird, die unterhalb der Grenzkennlinie des Drosselklappenwinkel-Drehzahl-Diagramms liegen, wobei die Grenzkennlinie vorzugsweise im oberen Lastbereich, insbesondere im Bereich zwischen 60 und 95 % der Vollast liegt. Ferner wird der Meßwert des Heißfilm-Luftmassenmessers als gültige Größe bei Drehzahlen verwendet, die oberhalb einer Grenzdrehzahl von vorzugsweise 3000 1/min liegen.

Da geringe Veränderungen sehr kleiner Drosselklappenwinkel sehr große Änderungen des Volumenstromes im Saugrohr mit sich bringen, ist dieser Betriebsbereich für die Erzeugung des Korrektursignals und damit für die Adaption ungeeignet. Vorzugsweise wird die Adaption somit nicht in dem genannten Bereich durchgeführt.

Sofern die Leerlaufeinstellung der Brennkraftmaschine durch einen Bypaß-Steller erfolgt, wird der zweite Wert um die Leerlauf-Teilluftmasse, die vom Drosselklappenwinkel nicht erfaßt wird, korrigiert. Nur so läßt sich ein fehlerfreies Ergebnis erzielen.

Zur Erzeugung des Korrektursignals wird die Differenz der beiden durch die unterschiedlichen Luftmengen-Bestimmungsverfahren ermittelten Werte auf einen Integrator gegeben, dessen Ausgangswert einem Multiplizierer als eine erste Eingangsgröße zugeführt wird, wobei die zweite Eingangsgröße des Multiplizierers der nach dem zweiten Luftmengen-Bestimmungsverfahren ermittelte zweite Wert ist. Solange zwischen den beiden Werten eine Differenz vorhanden ist, wird der Integrator entsprechend "auf- oder abintegrieren". Hat die Differenz den Wert "Null", so bleibt der Integrator "stehen".

Nach einer Weiterbildung der Erfindung ist vorgesehen, daß aus dem korrigierten zweiten Wert eine dynamische Übergangs-Kompensationsgröße gebildet und der gültigen Größe überlagert wird. Diese Übergangskompensation hat die Aufgabe, die beim Kraftstofftransport auftretende Zeitverzögerung durch dynamische Kraftstoffmehr- oder -mindermengen zu kompensieren. Die Zeitverzögerung kommt dadurch zustande, daß die in das Saugrohr eingespritze Kraftstoffmenge nicht unmittelbar in den entsprechenden Zylinder der Brennkraftmaschine gelangt, sondern zunächst quasi an der Saugrohrwandung "hängenbleibt". Erst im Zuge folgender Arbeitszyklen der Brennkraftmaschine stellt sich -entsprechend des vorliegenden Betriebspunktes der Brennkraftmaschine- die korrekte Kraftstoffmenge im Zylinder ein. Das während des Übergangsverhaltens auftretende Defizit bzw. Übermaß wird durch die dynamische Übergangskompensation ausgeglichen.

### Zeichnung

Die Erfindung wird im folgenden anhand der Figuren näher erläutert. Es zeigen:
Figur 1 ein Blockschaltbild einer Schaltungsanordnung des erfindungsgemäßen Verfahrens,
Figur 2 ein Diagramm, das das zeitliche Verhalten der im Saugrohr einer Brennkraftmaschine vorliegenden Luftströmung verdeutlicht,
Figur 3 ein der Figur 2 entsprechendes Diagramm mit stark pulsierender sowie Rückströmung aufweisender Luftströmung,
Figur 4 ein Drosselklappenwinkel-Drehzahl-Diagramm mit einer 95% Vollast-Grenzkennlinie,
Figur 5 eine schematische Darstellung eines Saugrohres mit Leerlauf-Bypaß und
Figur 6 eine schematische Darstellung des Zylinderkopfbereiches eines Zylinders der Brennkraftmaschine.

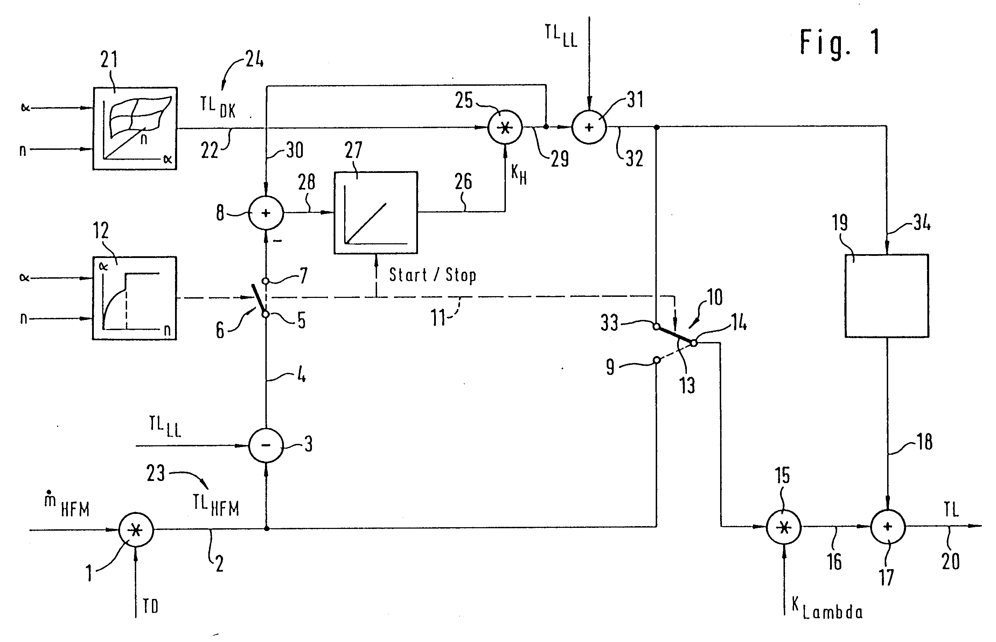

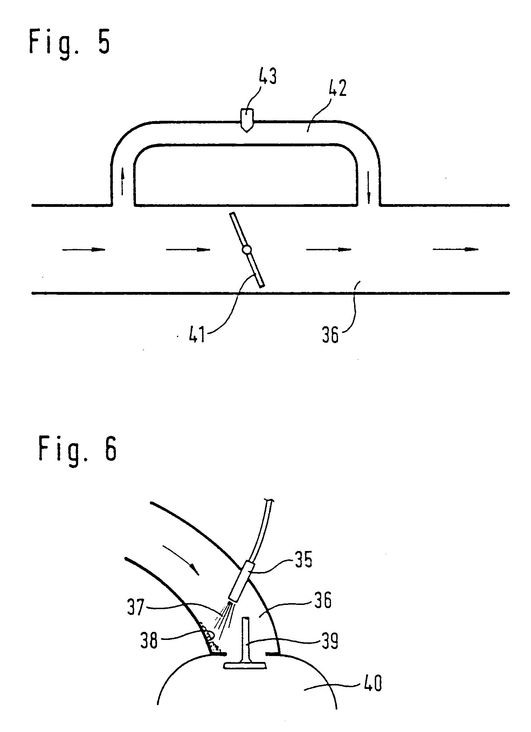

Gemäß Figur 1 wird die von dem nicht dargestellten Heißfilm-Luftmassenmesser pro Zeiteinheit erfaßte Luftmasse ṁ_{HFM} einer Multiplikationsstelle 1 zugeführt, an die als weiteres Eingangsignal die Periodendauer TD einer Saugperiode einer Brennkraftmaschine angelegt ist. Mit der Ausgangsgröße 2 der Multiplikationsstelle 1 steht die durch den Heißfilm-Luftmassenmesser ermittelte Einspritzzeit TL_{HFM} zur Verfügung, die einer bestimmten Kraftstoffmasse pro Hub entspricht. Unter der Voraussetzung einer stöchiometrischen Verbrennung ist die Einspritzzeit TL_{HFM} proportional zu einer entsprechenden Luftmasse pro Hub. Die Einspritzzeit TL_{HFM} wird einer Subtraktionsstelle 3 zugeführt, der ferner eine Leerlauf-Einspritzzeit TL_{LL} zugeleitet wird. Diese Leerlauf-Einspritzzeit TL_{LL} entspricht einer bestimmten Luftmenge pro Hub, die -in einem parallel zur Drosselklappe liegenden Bypaß für die Leerlaufeinstellung zur Verfügung gestellt werden muß (vergleiche Figur 5).

Der Ausgangswert 4 der Subtraktionsstelle 3 wird dem einen Pol 5 eines Schaltelements 6 zugeleitet. Der andere Pol 7 des Schaltelements 6 ist mit einer Summationsstelle 8 verbunden.

Die der Einspritzzeit TL_{HFM} entsprechende Ausgangsgröße 2 ist ferner an einen Pol 9 eines Umschalters 10 angeschlossen, der vorzugsweise gleichzeitig mit dem Schaltelement 6 mittels einer Wirkverbindung 11 betätigt werden kann. Die Betätigung erfolgt durch eine Steuerschaltung 12, auf die im nachfolgenden noch näher eingegangen wird.

Ein einen Umschaltkontakt 13 aufweisender Pol 14 des Umschalters 10 ist an eine Multiplikationsstelle 15 angeschlossen, die als weitere Eingangsgröße einen aus einer Lambda-Regelung gewonnenen Korrekturfaktor K_{Lambda} erhält Wenn somit bei der Brennkraftmaschine ein Lambda ungleich 1, das heißt, eine nicht stöchiometrische Verbrennung vorliegt, so wird dieses durch den Korrekturfaktor K_{Lambda} berücksichtigt.

Der Ausgang 16 der Multiplikationsstelle 15 ist an eine Summationsstelle 17 zur Zuführung einer Eingangsgröße angeschlossen. Als zweiten Summanden erhält die Summationsstelle 17 einen Ausgangswert 18 einer Übergangs-Kompensationsschaltung 19. Am Ausgang 20 der Summationsstelle 17 steht die Einspritzzeit TL zur Verfügung.

Der Drosselklappenwinkel α und die Drehzahl n (Ist-Drehzahl) der Brennkraftmaschine werden einem Kennfeld 21 zugeführt, das als Ausgangsgröße 22 eine vom Drosselklappenwinkel α und der Drehzahl n abhängige Einspritzzeit TL_{DK} liefert. Die auf diese Art und Weise ermittelte Einspritzzeit TL_{DK} ist einer entsprechenden Luftmenge pro Hub proportional. Mithin erfolgt die Luftmassen- bzw Luftmengenerfassung mittels zweier unterschiedlicher Verfahren, und zwar zum einen mit dem bereits beschriebenen Heißfilm-Luftmassenmesser, der die Luftmasse erfaßt, und zum anderen über das Drosselklappenwinkel-Drehzahl-Kennfeld 21, welches die Ermittlung der Luftmenge ermöglicht. Die der Einspritzzeit TL_{HFM} zugehörige Luftmasse stellt einen ersten Wert 23 und die der Einspritzzeit TL_{DK} zugehörige Luftmenge einen zweiten Wert 24 dar. Während bei dem Heißfilm-Luftmassenmesser die Dichte der Luft prinzipiell berücksichtigt wird, ist dieses bei dem α/n-Verfahren nicht der Fall, so daß -wie bereits ausgeführt- beim Heißfilm-Luftmassenmesser die tatsächliche Luftmasse, beim α/n-Verfahren jedoch nur die Luftmenge erfaßt wird, die -zur Bestimmung der Luftmasse- höhenkorrigiert (dichtekorrigiert) werden muß.

Die Einspritzzeit TL_{DK} wird einer Multiplikationsstelle 25 zugeleitet. Der Multiplikationsstelle 25 wird als weiterer Faktor ein Ausgangswert 26 eines Integrators 27 zugeleitet, der mit seinem Eingang an einen Ausgang 28 der Summationsstelle 8 angeschlossen ist. Der Ausgang 29 der Multiplikationsstelle 25 führt zu einem weiteren Eingang 30 der Summationsstelle 8. Da das von der Multiplikationsstelle 25 kommende Signal der Summationsstelle 8 mit positivem und das vom Schaltelement 6 kommende Signal der Summationsstelle 8 mit negativem Vorzeichen zugeführt wird, steht am Ausgang 28 die Differenz der beiden Signale zur Verfügung.

Der Ausgang 29 der Multiplikationsstelle 25 führt ferner zu einer Summationsstelle 31, die als weitere Eingangsgröße die bereits genannte Einspritzzeit TL_{LL} erhält. Der Ausgang 32 der Summationsstelle 31 führt zu einem Pol 33 des Umschalters 10. Ferner steht der Ausgang 32 mit einem Eingang 34 der Übergangs-Kompensationsschaltung 19 in Verbindung.

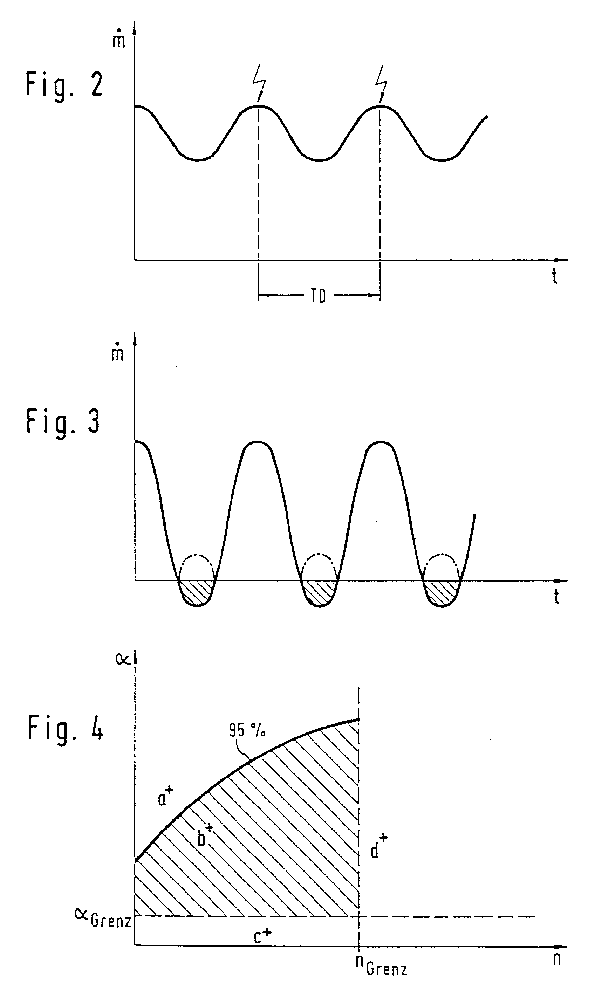

Die Figur 2 zeigt den zeitlichen Verlauf der Luftströmung im Saugrohr der Brennkraftmaschine. Deutlich ist erkennbar, daß die Luftmasse pro Zeiteinheit (ṁ) pulsiert, das heißt, es liegt keine kontinuierliche Strömung vor. Die Pulsation ist eine Rückwirkung der nicht kontinuierlich, sondern taktweise erfolgenden Arbeitszyklen der Brennkraftmaschine. Zwischen je zwei Zündzeitpunkten liegt die Periodendauer TD einer Saugperiode.

In bestimmten Betriebsbereichen der Brennkraftmaschine kann die Pulsation derart groß werden, daß Rückströmung eintritt. Dieses bedeutet, daß der Luftmassenstrom seine Richtung im Saugrohr umkehrt. Die Rückströmung ist in der Figur 3 schraffiert gekennzeichnet. Da der Heißfilm-Luftmassenmesser keine Strömungsrichtungserfassung vornehmen kann, wird auch die rückströmende Luftmasse positiv erfaßt, so daß ein Meßfehler auftritt. Der Heißfilm-Luftmassenmesser mißt die in der Figur 3 schraffierten Bereiche als der Brennkraftmaschine zugeleitete Luftmassen; dieses ist in der Figur 3 strichpunktiert angedeutet. Die insofern durch das Heißfilm-Luftmengenerfassungsverfahren auftretenden Fehler werden durch das erfindungsgemäße, im nachstehenden noch näher erläuterte Verfahren beseitigt.

Die das Schaltelement 6 und den Umschalter 10 über die Wirkverbindung 11 betätigende Steuerschaltung 12 weist eine Grenzkennlinie gemäß dem Diagramm der Figur 4 auf. Auf der Ordinate des Diagramms ist der Drosselklappenwinkel α und auf der Abszisse die Drehzahl n der Brennkraftmaschine aufgetragen. Die Last der Brennkraftmaschine ist von dem Drosselklappenwinkel α derart abhängig, daß bereits bei relativ kleinen Drosselklappenwinkeln α für kleine Drehzahlen der Saugrohrdruck bei einem weiteren öffnen der Drosselklappe nicht mehr zunimmt. Der Drosselklappenwinkel α ist außerdem noch eine Funktion der Drehzahl n. Die Kennlinie der Figur 4 beschreibt die Drehzahlabhängigkeit eines Grenzwinkels, der so bestimmt ist, daß seine Einstellung 95% der Vollast entspricht. Das Diagramm der Figur 4 weist ferner eine Drehzahl-Grenzlinie n_{Grenz} und eine Drosselklappenwinkel-Grenzlinie α_{Grenz} auf. Die Erfindung macht sich zunutze, daß in dem in der Figur 4 schraffiert eingezeichneten Bereich keine Rückströmung auftritt. Dies bedeutet, daß zur Erfassung der Einspritzzeit TL bzw. der Luftmasse pro Zeiteinheit der vom Heißfilm-Luftmassenmesser erfaßte Meßwert (erster Wert 23) verwendet werden kann. Der genannte Bereich liegt unterhalb der 95%-Grenzkennlinie und ist durch die Drehzahl-Grenzlinie n_{Grenz} und die Drosselklappenwinkel-Grenzlinie α_{Grenz} begrenzt. Arbeitspunkte, die oberhalb der 95%-Grenzkennlinie liegen (wie z. B. der Arbeitspunkt a) erfordern eine Luftmassenerfassung, die nicht mit dem Heißfilm-Luftmassenmesser erfolgt, weil Meßfehler auftreten. Hier wird das bereits genannte, zweite Luftmengen-Bestimmungsverfahren eingesetzt, das mit Hilfe der Drosselklappenwinkel- und Drehzahlerfassung und ferner über das Kennfeld 21 erfolgt. Mithin wird für den genannten Arbeitspunkt eine TL_{DK} Einspritzzeit-Erfassung vorgenommen.

Der in der Figur 4 eingezeichnete Betriebspunkt b liegt innerhalb des schraffierten Bereichs. Da hier keine Rückströmung auftritt und mithin der Heißfilm-Luftmassenmesser fehlerfrei arbeitet, kann die Luftmasse über den Heißfilm-Luftmassenmesser erfaßt werden. Für Arbeitspunkte, die einen sehr kleinen Drosselklappenwinkel α aufweisen (Arbeitspunkt c in Figur 4) gilt, daß bereits sehr kleine Änderungen des Drosselklappenwinkel α zu relativ großen Änderungen des Volumenstroms der Luft führen. Dieses setzt besonders hochwertige Winkelstellungserfassungseinrichtungen für die Drosselklappe voraus, die außerdem spielfrei arbeiten müssen und daher sehr teuer sind. Da nach dem erfindungsgemäßen Verfahren eine preisgünstige Lösung angestrebt ist und daher die Drosselklappenstellung mit einem normalen Potentiometer erfolgen soll, wird dieser Drosselklappenwinkelbereich nicht verwendet, um eine im nachfolgenden noch näher beschriebene Adaption der Einspritzzeit TL_{DK} vorzunehmen. Anderseits wird jedoch in dem hier vorliegenden Bereich kleiner Drosselklappenwinkel α und insbesondere auch im Leerlauf-Bereich die Luftmassenerfassung mit dem Heißfilm-Luftmassenmesser vorgenommen.

Bei Drehzahlen, die oberhalb der Drehzahlgrenzlinie n_{Grenz} liegen, ist keine Rückströmung möglich. Insofern erfolgt in diesem Bereich die Luftmassenerfassung mittels des Heißfilm-Luftmassenmessers.

Die Steuerschaltung 12 betätigt -je nach Lage des momentan vorhandenen Betriebspunktes- das Schaltelement 6 und den Umschalter 10 in der Art, daß im rückströmungsfreien Betriebsbereich die Luftmassenerfassung mittels des Heißfilm-Luftmassenmessers. Bei auftretender Rückströmung -also bei Betriebspunkten die oberhalb der 95%-Grenzkennlinie liegen- wird für die Luftmengenerfassung bzw. der dieser proportionalen Erfassung der Einspritzzeit TL_{DK} das weitere, zweite Luftmengen-Bestimmungsverfahren herangezogen, das mit dem Drosselklappenwinkel α und der Drehzahl n sowie dem Kennfeld 21 arbeitet. Die in der Figur 1 gestrichelt dargestellten Schaltstellungen des Schaltelements 6 und des Umschalters 10 entsprechen einem Betrieb, bei dem der Heißfilm-Luftmassenmesser eingesetzt wird. Der Ausgangswert des Heißfilm-Luftmassenmessers (ṁ_{HFM}) wird an der Multiplikationsstelle 1 mit der Periodendauer TD einer Saugperiode multipliziert und die so gebildete Einspritzzeit TL_{HFM} über den Umschalter 10 der Multiplikationsstelle 15 zugeführt. Hier erfolgt eine Multiplikation mit dem Korrekturfaktor K_{Lambda}, der aus der bereits erwähnten Lambda-Regelung gewonnen wird. Der am Ausgang 16 der Multiplikationsstelle 15 zur Verfügung stehende Wert wird dann über die Summationsstelle 17 an den Ausgang 20 gegeben. Die auf diese Art und Weise ermittelte Einspritzzeit TL basiert demgemäß auf der Messung des Heißfilm-Luftmassenmessers.

Da sich in der zuvor beschriebenen Betriebsweise das Schaltelement 6 in geschlossenem Zustand befindet, wird die Einspritzzeit TL_{HFM} ferner über die Subtraktionsstelle 3 auf die Summationsstelle 8 geführt. Der im jeweiligen Betriebspunkt der Brennkraftmaschine vorliegende Drosselklappenwinkel α sowie die dazugehörige Drehzahl n werden über das Kennfeld 21 und die Multiplikationsstelle 25 ebenfalls an die Summationsstelle 8 gegeben. Mithin erfolgt an der Summationsstelle 8 ein Vergleich des ersten Wertes 23 (TL_{HFM}) mit dem zweiten Wert 24 (TL_{DK}). Das Vergleichen dieser beiden Werte wird vorgenommen, um ein Korrektursignal K_{H} am Ausgang des Integrators 27 zu erzeugen. Dieses Korrektursignal K_{H} berücksichtigt den Höheneinfluß, dem die Last (TL_{DK}) des α/n-Kennfelds unterliegt. Würde man diese Höhenkorrektur nicht vornehmen, so wäre der zweite Wert 24 fehlerbehaftet. Der Fehler beträgt etwa 10% pro 1000 Meter Höhe.

Die Höhenkorrektur erfolgt nach einem adaptiven Verfahren. Dieses bedeutet, daß für Betriebsbereiche, in denen keine Rückströmung auftritt, ständig ein Vergleich des ersten Wertes 23 mit dem zweiten Wert 24 vorgenommen und aus diesem Vergleich das Korrektursignal K_{H} ermittelt wird. Sofern dann anschließend ein rückströmungsbehafteter Betriebsbereich von der Brennkraftmaschine angefahren wird, so schaltet einerseits die Steuerschaltung 12 das Schaltelement 6 sowie den Umschalter 10 derart um, daß von der Erfassung der Luftmasse mittels des Heißfilm-Luftmassenmessers auf die α/n-Erfassung übergegangen wird. Mithin liegt dann der in der Figur 1 mit durchgezogen dargestellten Kontakten wiedergegebene Schaltzustand vor. Die Einspritzzeit TL_{DK} wirdhierbei der Multiplikationsstelle 25 zugeführt und mittels des Korrektursignals K_{H} entsprechend adaptiv korrigiert. An der Summationsstelle 31 erfolgt dann noch die Leerlaufkorrektur. Die so ermittelte Einspritzzeit wird über den Umschalter 10 zur Multiplikationsstelle 15 gegeben. Dort wird die Lambda-Korrektur vorgenommen und schließlich steht die Einspritzzeit TL am Ausgang 20 zur Verfügung. Die Adaption hat zur Folge, daß bei dem Korrektursignal K_{H} mit einem Wert gearbeitet wird, der kurz vor der Umschaltung vom Heißfilm-Luftmassenmesserbetrieb zum α/n-Betrieb ermittelt wurde. Mithin liegt ein sich den aktuellen Gegebenheiten anpassendes, Höhenfehler ausgleichendes System vor.

Eine Besonderheit kann insofern vorgenommen werden, daß die Adaption für Betriebsbereiche mit einem sehr kleinen Drosselklappenwinkel α unterbunden wird, da dies -wie bereits beschrieben- ein hochauflösendes Potentiometer zur Erfassung der Drosselklappenstellung erfordern würde. Mithin ist bei dieser Variante das Schaltelement 6 mit dem Umschalter 10 nicht starr gekoppelt, sondern es wird ein getrenntes Schalten des Schaltelements 6 unabhängig vom Schaltzustand des Umschalters 10 vorgenommen.

Die Figur 5 zeigt einen Abschnitt des Saugrohrs 36, der die Drosselklappe 41 aufweist. Die Drosselklappe 41 wird von einem Bypaß 42 mit Bypaßsteller 43 überbrückt, um auf diese Art und Weise die Leerlaufeinstellung der Brennkraftmaschine vornehmen zu können. Insofern kann der im Bereich der Drosselklappe 41 angeordnete Heißfilm-Luftmassenmesser die den Bypaß 42 passierende Teilluftmenge nicht erfassen. Die erfindungsgemäße Anordnung gemäß der Figur 1 nimmt daher eine dementsprechende Korrektur vor (TL_{LL}).

Aus Figur 1 ist fernerhin ersichtlich, daß der durch die höhenabhängige Adaption korrigierte Einspritzzeitwert (TL_{DK}) unabhängig davon, ob das erste Luftmassen-Bestimmungsverfahren (Heißfilm-Luftmassenmesser) oder das zweite Luftmengen-Bestimmungsverfahren (α/n-Verfahren) im Einsatz ist, über die Summationsstelle 31 der Übergangs-Kompensationsschaltung 19 zugeführt wird. Der Ausgangswert 18 der Übergangskompensationsschaltung 19 wird dem Wert des Ausgangs 16 der Multiplikationsstelle 15 stets additiv mit Hilfe der Summationsstelle 17 zur Erzeugung der Einspritzzeit TL (Ausgang 20) zugefügt. Allerdings tritt ein Ausgangswert 18 nur im Falle dynamischer Übergänge auf, das heißt, wenn aufgrund eines zeitverzögerten "Hängenbleibens" von Kraftstoff-Änderungsmengen an der Saugrohrwand eine entsprechende Übergangskorrektur im Hinblick auf die Luftmengenzuführung erforderlich ist. Die Figur 6 veranschaulicht die Kraftstoff-Zeitverzögerung. Der von dem dort dargestellten Einspritzventil 35 in das Saugrohr 36 eingebrachte Kraftstoff 37 bleibt teilweise als Belag 38 an der Saugrohrwandung hängen und tritt erst zeitverzögert durch das Einlaßventil 39 in den Zylinder 40 ein.

Das erfindungsgemäße Verfahren hat in den Bereichen, in denen der Heißfilm-Luftmassenmesser zur Ermittlung zur Luftmasse herangezogen wird, den Vorteil einer hohen Genauigkeit, so daß auch der Lastwert sehr genau bestimmt werden kann. Ein Höhenfehler tritt hierbei nicht auf. Beim Auftreten von Rückströmungen ist dann das zweite LuftmengenBestimmungsverfahren vorgesehen, daß adaptiv höhenkorrigiert ist (Dichtekorrektur), wobei zur Erfassung des Drosselklappenwinkels α nur ein einfaches, einbahniges Potentiometer eingesetzt werden kann, da dessen Genauigkeit genügt, denn die Einspritzzeit TL_{DK} wird nur in den Betriebszuständen als gültige Größe herangezogen, in denen große Luftmengen umgesetzt werden. Damit können die Anforderungen an die Auflösung und an die Linearität des eingesetzten Potentiometers reduziert werden.

Überdies ist vorgesehen, daß die beschriebene Übergangskompensation mit TL_{DK}-Werten vorgenommen wird, die wesentlich schneller zur Verfügung stehen, als die Werte des Heißfilm-Luftmassenmessers, da dieses Meßgerät eine gewisse Trägheit besitzt. Es steht somit eine Übergangskompensation mit sehr kurzer Reaktionszeit zur Verfügung.

## Patentansprüche

1. Verfahren zur Korrektur eines durch Rückströmung auftretenden Meßfehlers eines Heißfilm-Luftmassenmessers, insbesondere zur Luftmassenerfassung der Verbrennungsluft einer Brennkraftmaschine, bei dem die Luftmenge mit dem Heißfilm-Luftmassenmesser als ein erster Wert (23) und ferner mit einem unabhängig davon arbeitenden, zweiten Luftmengen-Bestimmungsverfahren als ein zweiter Wert (24) erfaßt wird, und bei dem die beiden Werte (23, 24) alternativ in Abhängigkeit von die Meßsicherheit bestimmenden Betriebsbereichen als gültige Größe herangezogen werden dadurch gekennzeichnet daß in mindestens einem rückströmungsfreien Betriebsbereich ein Korrektursignal (K_{H}) aus einem Vergleich des ersten (23) und des zweiten Wertes (24) gewonnen und zur Korrektur des zweiten Wertes (24) in Rückströmung aufweisenden Betriebsbereichen verwendet wird.

2. Verfahren nach Anspruch 1, **dadurch gekennzeichnet**, daß das Korrektursignal (K_{H}) ein Höhenkorrektursignal und/oder ein Temperaturkorrektursignal ist.

3. Verfahren nach einem der vorhergehenden Ansprüche, **dadurch gekennzeichent**, daß bei dem zweiten Luftmengen-Bestimmungsverfahren der Drosselklappenwinkel (α) und die Drehzahl (n) der Brennkraftmaschine herangezogen und zur Bestimmung, des zweiten Wertes (24) einer Kennfeld- und/oder Algorithmus-Bearbeitung unterzogen wird.

4. Verfahren nach einem der vorhergehenden Ansprüche, **dadurch gekennzeichnet**, daß der Meßwert des Heißfilm-Luftmassenmessers als gültige Größe im Leerlauf, bei kleinen Drosselklappenwinkeln (α) und bei hohen Drehzahlen (n) verwendet wird.

5. Verfahren nach einem der vorhergehenden Ansprüche, **dadurch gekennzeichnet**, daß der Meßwert des Heißfilm-Luftmassenmessers als gültige Größe bei Arbeitspunkten herangezogen wird, die unterhalb einer Grenzkennlinie eines Drosselklappenwinkel-Drehzahl-Diagramms liegen.

6. Verfahren nach einem der vorhergehenden Ansprüche, **dadurch gekennzeichnet**, daß die Grenzkennlinie eine im oberen Lastbereich, insbesondere im Bereich zwischen 60% bis 95% der Vollast liegende Kennlinie ist.

7. Verfahren nach einem der vorhergehenden Ansprüche, **dadurch gekennzeichnet**, daß der Meßwert des Heißfilm-Luftmassenmessers als gültige Größe bei Drehzahlen (n) verwendet wird, die oberhalb einer Drehzahl-Grenzlinie (n_{Grenz}) von vorzugsweise 3000 1/min liegt.

8. Verfahren nach einem der vorhergehenden Ansprüche, **dadurch gekennzeichnet**, daß die Adaption nicht im Bereich sehr kleiner Drosselklappenwinkel (α) erfolgt.

9. Verfahren nach einem der vorhergehenden Ansprüche, **dadurch gekennzeichnet**, daß der zweite Wert (24) bei einer durch Bypaß-Steller (43) erfolgenden Leerlaufeinstellung um die Leerlauf-Teilluftmasse korrigiert wird.

10. Verfahren nach einem der vorhergehenden Ansprüche, **dadurch gekennzeichnet**, daß die Differenz der beiden Werte (23, 24) auf einen Integrator (27) gegeben wird, dessen Ausgangswert (26) einer Multiplikationsstelle (25) als eine erste Eingangsgröße zugeführt wird und dessen zweite Eingangsgröße der zweite Wert (24) ist.

11. Verfahren nach einem der vorhergehenden Ansprüche, **dadurch gekennzeichnet**, daß aus dem adaptierten zweiten Wert (24) eine dynamische Übergangskompensations-Größe gebildet und der gültigen Größe überlagert wird.

## Claims

1. Method for correcting a measurement error of a hot-film air-mass meter occurring due to reverse flow, in particular for sensing the air mass of the combustion air of an internal-combustion engine, in which the air flow rate is sensed as a first value (23) with the aid of the hot-film air-mass meter and, furthermore, is sensed as a second value (24) by means of a second method for determining air flow rate operating independently thereof, and in which, depending on operating ranges determining the measurement reliability, the two values (23, 24) are alternatively used as a valid variable, characterized in that in at least one operating range free of reverse flow a correction signal (K_{H}) is obtained from a comparison of the first (23) and the second value (24) and used to correct the second value (24) in operating ranges having reverse flow.

2. Method according to Claim 1, characterized in that the correction signal (K_{H}) is an altitude correction signal and/or a temperature correction signal.

3. Method according to one of the preceding claims, characterized in that in the second method for determining air flow rate it is the throttle valve angle (α) and the speed (n) of the internal-combustion engine that are used and subjected to characteristic-map and/or algorithmic processing to determine the second value (24).

4. Method according to one of the preceding claims, characterized in that the measured value of the hot-film air-mass meter is used as valid variable during idling, at low throttle valve angles (α) and at high speeds (n).

5. Method according to one of the preceding claims, characterized in that the measured value of a hot-film air-mass meter is used as a valid variable in the case of operating points that are below a limiting characteristic curve of a throttle valve angle/speed diagram.

6. Method according to one of the preceding claims, characterized in that the limiting characteristic curve is a characteristic curve in the upper load range, in particular in the range between 60% and 95% of the full load.

7. Method according to one of the preceding claims, characterized in that the measured value of the hot-film air-mass meter is used as a valid variable in the case of speeds (n) above a speed limiting curve (n_{Limit}) of preferably 3000 1/min.

8. Method according to one of the preceding claims, characterized in that the adaptation is not performed in the range of very small throttle valve angles (α).

9. Method according to one of the preceding claims, characterized in that in the case of idling adjustment performed by a bypass controller (43) the second value (24) is corrected by the idling partial air mass.

10. Method according to one of the preceding claims, characterized in that the difference between the two values (23, 24) is passed to an integrator (27) whose output value (26) is fed as a first input variable to a multiplier (25), and whose second input variable is the second value (24).

11. Method according to one of the preceding claims, characterized in that a dynamic transition compensation variable is formed from the adapted second value (24) and superimposed on the valid variable.

## Revendications

1. Procédé pour corriger une erreur de mesure d'un appareil de mesure de masses d'air à pellicule chaude, survenant du fait d'un écoulement en retour, en particulier pour la masse de l'air comburant d'un moteur à combustion interne, dans lequel la quantité d'air est déterminée par l'appareil de mesure de masses d'air à pellicule chaude en tant que première valeur (23) et en outre par un deuxième procédé de détermination des quantités d'air, fonctionnant indépendamment du premier, en tant que deuxième valeur (24) et dans lequel on utilise alternativement comme grandeur valable, l'une des deux valeurs (23, 24) en fonction des zones de fonctionnement déterminant la sûreté de la mesure, procédé caractérisé en ce qu'on obtient, dans au moins une zone de fonctionnement exempte d'écoulement en retour, un signal de correction (K_{H}) à partir d'une comparaison entre la première valeur (23) et la seconde valeur (24), et on l'utilise pour corriger la deuxième valeur (24) dans des zones de fonctionnement présentant un écoulement en retour.

2. Procédé selon la revendication 1, caractérisé en ce que le signal de correction (K_{H}) est un signal de correction d'altitude et/ou un signal de correction de température.

3. Procédé selon l'une des revendications précédentes, caractérisé en ce que, dans le cas du second procédé de détermination de la quantité d'air, on utilise l'angle (α) du papillon d'étranglement et la vitesse de rotation (n) du moteur à combustion interne, et pour déterminer la deuxième valeur (24), on utilise un champ caractéristique et/ou un traitement d'algorithme.

4. Procédé selon l'une des revendications précédentes, caractérisé en ce que la valeur de mesure de l'appareil de mesure des masses d'air à pellicule chaude, est utilisée comme grandeur valable au ralenti, dans le cas d'un angle (α) petit du papillon d'étranglement et dans le cas de vitesses de rotation (n) élevées.

5. Procédé selon l'une des revendications précédentes, caractérisé en ce que la valeur de mesure de l'appareil de mesure de masses d'air à pellicule chaude est utilisée comme grandeur valable dans le cas de points de fonctionnement qui se trouvent en dessous d'une courbe caractéristique limite d'un diagramme représentant l'angle du papillon d'étranglement en fonction de la vitesse de rotation.

6. Procédé selon l'une des revendications précédentes, caractérisé en ce que la courbe caractéristique limite est une courbe caractéristique se trouvant dans la zone supérieure de la charge, en particulier dans la zone comprise entre 60 % et jusqu'à 95 % de la pleine charge.

7. Procédé selon l'une des revendications précédentes, caractérisé en ce que la valeur de mesure de l'appareil de mesure de masses d'air à pellicule chaude est utilisée comme grandeur valable dans le cas de vitesses de rotation (n) qui se trouvent au-dessus d'une ligne limite de vitesse de rotation (n_{Lin}) de 3000 tours/minute de préférence.

8. Procédé selon l'une des revendications précédentes, caractérisé en ce que l'adaptation n'a pas lieu dans la zone des très petits angles (α) du papillon d'étranglement.

9. Procédé selon l'une des revendications précédentes, caractérisé en ce que la deuxième valeur (24) est corrigée, de la masse partielle d'air de ralenti dans le cas d'une mise au ralenti ayant lieu au moyen d'une unité de commande (43) de dérivation.

10. Procédé selon l'une des revendications précédentes, caractérisé en ce que la différence des deux valeurs (23, 24) est fournie à un intégrateur (27) dont la valeur de sortie (26) est amenée, en tant que première grandeur d'entrée, à un point de multiplication (25), et dont la deuxième grandeur d'entrée est la deuxième valeur (24).

11. Procédé selon l'une des revendications précédentes, caractérisé en ce que l'on forme, à partir de la deuxième valeur (24) adaptée, une grandeur de compensation de transition qu'on superpose à la grandeur valable.
